# EUROPÄISCHE PATENTSCHRIFT

(11) **EP 3 716 423 B1**
(45) Veröffentlichungstag und Bekanntmachung des Hinweises auf die Patenterteilung: **06.09.2023**
(21) Anmeldenummer: 20165591.7
(22) Anmeldetag: 25.03.2020
(51) Int. Cl.: H02G 1/00, H02G 3/12

(54) **WERKZEUG ZUM AUSGERICHTETEN MONTIEREN VON GERÄTEEINSÄTZEN**
TOOL FOR THE ALIGNED MOUNTING OF TOOL INSERTS
OUTIL DE MONTAGE ALIGNÉ DES INSERTS D'APPAREIL

(30) Priorität: 29.03.2019 DE 202019001472 U
(43) Veröffentlichungstag der Anmeldung: 30.09.2020
(73) Patentinhaber: Esterl, Josef, 85633 Großhelfendorf (DE)
(72) Erfinder: Esterl, Josef, 85633 Großhelfendorf (DE)
(74) Vertreter: Zeitler Volpert Kandlbinder Patentanwälte Partnerschaft mbB

(56) Entgegenhaltungen:
- DE-A1-102008 032 838
- DE-U1- 29 511 109
- DE-U1- 29 818 250
- DE-U1- 29 905 482
- DE-U1-202016 102 267

## Beschreibung

Die Erfindung betrifft ein Werkzeug zum ausgerichteten Montieren von Geräteeinsätzen für Steckdosen, Schalter und dergleichen in Gerätedosen gemäß dem Oberbegriff von Patentanspruch 1.

In der Praxis ist das ausgerichtete Montieren von Geräteeinsätzen für Steckdosen, Schalter und dergleichen in Gerätedosen, welche üblicherweise in eine Wand eingelassen und daher gewissermaßen vormontiert sind, aufwändig und nicht unkompliziert. Mit der einen Hand hält ein Monteur den Geräteeinsatz, mit der anderen Hand wird eine Wasserwaage an den in die Gerätedose eingeschobenen Geräteeinsatz angelegt, so dass der Geräteeinsatz mithilfe der Wasserwaage ausgerichtet, d.h. derart verschoben oder gedreht werden kann, bis beispielsweise eine Oberkante des Geräteeinsatzes in exakt horizontaler Ausrichtung und eine Seitenkante des Geräteeinsatzes in exakt vertikaler Ausrichtung angeordnet ist. Sodann ist die Wasserwaage abzulegen und ein Schraubendreher zu fassen, mit dessen Hilfe der Geräteeinsatz in der vorher festgelegten exakt ausgerichteten Position über Befestigungsmittel, wie zum Beispiel Schrauben, mit der Gerätedose fest verbunden wird. Insbesondere beim Ablegen der Wasserwaage bzw. beim Greifen des Schraubendrehers kann es zu unbeabsichtigten Positionsänderungen des zuvor bereits ausgerichteten Geräteeinsatzes kommen, so dass sich dieser nicht mehr in der gewünschten exakt ausgerichteten Position befindet. Ein Festziehen des unerwünscht verschobenen und daher nicht mehr exakt ausgerichteten Geräteeinsatzes relativ zur Gerätedose führt letztlich beispielsweise zu einer schief angebrachten Steckdose bzw. zu nicht mehr horizontal und/oder vertikal ausgerichteten Schaltern. Da das menschliche Auge auf derartige Abweichungen empfindlich reagiert, werden derartige die horizontale oder vertikale Ausrichtung verlassende Anordnungen üblicherweise als mängelbehaftet angesehen. Nachbesserungen mit einem für den Monteur erhöhten Zeitaufwand sind die Folge.

Problematisch ist, dass sich ein bei einer ersten Gerätedose auftretender Montagefehler in der Ausrichtung dieser Dose bei mehreren neben- oder übereinander angeordneten Gerätedosen vervielfältigt, so dass die Ausrichtung der dritten oder vierten Gerätedose innerhalb einer horizontalen oder vertikalen Reihe von Gerätedosen besonders kompliziert und aufwändig sein kann.

Die Druckschrift DE 299 05 482 U1 betrifft eine Vorrichtung zur Bestimmung der lagerichtigen Position von genormten Schalter-/Steckdoseneinsätzen in zugeordneten Unterputz-Schalterdosen. Dieses Werkzeug hat einen quaderförmigen Wasserwaagenkörper und ein Adapterteil, das in die Öffnung der Dose eingeführt wird und deren Querschnitt nahezu vollständig ausfüllt.

Aus der Druckschrift DE 20 2016 102 267 U1 ist ein Werkzeug zum Festlegen von Einbauteilen, wie Steckdosen, Schaltern oder Dimmern, in Unterputz- oder Hohlwanddosen bekannt. Es ist ein Set vorgesehen, welches aus einem derartigen Werkzeug sowie einer Anreißschablone zum Markieren der Einbauposition(en) eines oder mehrerer Anbauteile in Unterputz- oder Hohlwanddosen besteht. Das Werkzeug ist überaus kompliziert aufgebaut und in der Praxis kaum vernünftig zu handhaben. Das ist darauf zurückzuführen, dass ein Ballonelement in die Dose einzuführen ist und dort über einen aufwändigen Mechanismus zusammengequetscht und dadurch in radialer Richtung erweitert wird. Putzreste oder Leerrohrenden oder elektrische Anschlussdrähte können ggf. ein Einführen des Ballonelements unmöglich machen, so dass dieses Werkzeug für ein ausgerichtetes Montieren von Geräteeinsätzen ungeeignet ist.

Die Druckschrift DE 10 2008 032 838 A1 betrifft ein Werkzeug zum Ausrichten einer Dose einer elektrischen Installation und/oder zum Ausrichten eines in einer derartigen Dose befindlichen Einsatzes. Das Werkzeug nutzt eine an einer Dose bzw. einem Einsatz gegebenen Angriffs- und Positionierungsmöglichkeiten für das Werkzeug und unter Anwendung mindestens einer Libelle (Wasserwaage) wird eine manuelle Ausrichtung der Dose bzw. des Einsatzes ermöglicht. Das Werkzeug dient nicht zum Anzeichnen einer Markierungslinie. Es werden beispielsweise Stifte des Werkzeugs in Befestigungslöcher der Dose eingeführt. Dann wird die Dose verdreht, bis sie in Position gebracht ist, und anschließend in dieser Position befestigt. Die Handhabung dieses Geräts ist daher aufwändig und kompliziert, da einerseits das Werkzeug zu handhaben und andererseits die Dose in Position zu bringen ist und dann die Dose in ausgerichteter Position zu befestigen ist.

Aus der Druckschrift DE 295 11 109 U1 ist eine Schablone zum ausgerichteten Montieren von zusätzlichen Schalterdosen bekannt. Die Schablone weist Führungsstifte auf die in bestehenden Schalterdosen geführt werden. Mit Hilfe von Libellen wird die Schalterdose in waagerechter bzw. senkrechter Achse ausgerichtet. Nach erfolgter Ausrichtung wird die Position der neu zu setzenden Schalterdose mit Hilfe der Schablone gegenzeichnet oder vorgebohrt. Abschließend wird das Loch für die Schalterdose an der bezeichneten Stelle ausgesägt oder ausgefräst.

Die Druckschrift DE 298 18 250 U1 beschreibt eine Saugnapfhalterung mit einem Saugnapf für die Befestigung von CD-Hüllen. Der Saugnapf weist mit einer Halterung eine feste Verbindung auf.

Der Erfindung liegt die Aufgabe zugrunde, ein Werkzeug zu schaffen, mit dem eine ausgerichtete Montage von Geräteeinsätzen möglich ist.

Diese Aufgabe wird erfindungsgemäß durch ein Werkzeug mit den Merkmalen des Patentanspruchs 1 gelöst. Vorteilhafte Ausgestaltungen der Erfindung sind in den weiteren Ansprüchen beschrieben.

In Anspruch 1 ist ein Werkzeug zum ausgerichteten Montieren von Geräteeinsätzen für Steckdosen, Schalter und dergleichen in Gerätedosen vorgesehen, wobei das Werkzeug einen Werkzeugkörper hat, welcher eine Markierungskante und eine Einrichtung zum Ausrichten der Markierungskante relativ zur Gerätedose aufweist, ist es erfindungsgenäß vorgesehen, dass der Werkzeugkörper einen U- oder C-förmigen Querschnitt mit einem Grundkörper und zwei sich einander gegenüber liegend daran anschließenden Stegen hat, dass die Einrichtung zum Ausrichten der Markierungskante ein Mittel aufweist, mit dessen Hilfe die Markierungskante in einer vorbestimmten Lage relativ zur Gerätedose positionierbar ist und dass der Grundkörper und jeder Steg eine Ausnehmung hat, wobei die Ausnehmungen in den Stegen im Bereich der Mittel ausgebildet sind, und wobei ferner die Ausnehmungen im Bereich der Stege derart ausgebildet sind, dass das Mittel, mit dessen Hilfe die Markierungskante in einer vorbestimmten Lage relativ zur Gerätedose positionierbar ist, für den Monteur gut einsehbar und damit sichtbar ist.

Dahinter steckt der Gedanke, mithilfe des Werkzeugs an der Wand, also außerhalb der Gerätedose(n), eine exakt horizontale oder vertikale Linie anzuzeichnen, an der der in der Gerätedose zu montierende Geräteeinsatz exakt ausgerichtet und mit der Gerätedosen verbunden werden kann. Ein derart horizontal und/oder vertikal ausgerichteter Geräteeinsatz kann dann relativ unproblematisch in ausgerichteter Position mit der Gerätedose verschraubt werden. Eine solche Markierungskante kann an dem Werkzeug mit relativ geringem Aufwand vorgesehen werden. Die mithilfe der Markierungskante angezeichnete Markierungslinie ist gewissermaßen eine Hilfslinie zum exakten Ausrichten und Montieren des Geräteeinsatzes in der Gerätedose. Mithilfe der Einrichtung zum Ausrichten der Markierungskante relativ zur Gerätedose ist eine einfache Möglichkeit geschaffen, die Markierungskante in einer bestimmten Position relativ zur Gerätedose anzuordnen und die Markierungslinie in der gewünschten Position anzuzeichnen, so dass letztlich ein ausgerichtetes Montieren des Geräteeinsatzes unproblematisch möglich ist.

Vorteilhafterweise weist die Einrichtung zum Ausrichten der Markierungskante wenigstens eine Wasserwaage auf. Mithilfe der wenigstens einen Wasserwaage kann die Markierungskante in der gewünschten exakten horizontalen oder vertikalen Lage angeordnet werden, so dass eine ausgerichtete Markierungslinie schnell und daher mit geringem Zeitaufwand angezeichnet werden kann. An einer derart angeordneten Markierungslinie kann beispielsweise eine Kante des Geräteeinsatzes orientiert ausgerichtet werden, so dass sich der gesamte Geräteeinsatz in exakter horizontaler oder vertikaler Ausrichtung befindet und somit in dieser Position korrekt mit der Gerätedosen verbunden werden kann.

Das Mittel, mit dessen Hilfe die Markierungskante in einer vorbestimmten Lage relativ zur Gerätedose positionierbar ist, gewährleistet zunächst allgemein oder grundsätzlich eine korrekte Position der Markierungskante relativ zur Gerätedose, wobei diese Position über die wenigstens eine Wasserwaage horizontal und vertikal genau ausgerichtet werden kann. Damit befindet sich die Markierungskante bzw. die mithilfe der Markierungskante angezeichnete Markierungslinie einerseits in einer korrekten Position relativ zur Gerätedose, andererseits auch in einer exakten Position, welche in horizontaler und/oder vertikaler Richtung ausgerichtet ist.

Vorteilhafterweise ist das Mittel derart am Werkzeugkörper angeordnet, dass damit der gewünschte Abstand zwischen der Innenwand der Gerätedose und der Markierungskante festgelegt ist. Damit befindet sich die Markierungskante gewissermaßen automatisch in einer korrekten Position relativ zur Gerätedose, so dass die Markierungskante über die wenigstens eine Wasserwaage schnell und sicher horizontal bzw. vertikal ausgerichtet werden kann.

Gemäß einer Weiterbildung umfasst das Mittel wenigstens einen Stift, welcher an der Innenwand der Gerätedose anlegbar ist. Ein solcher Stift kann mit geringem Aufwand am Werkzeugkörper vorgesehen sein und bildet ein relativ einfaches Hilfsmittel zum Ausrichten der Markierungskante relativ zur Gerätedose.

Gemäß noch einer Weiterbildung der Erfindung steht das Mittel senkrecht von dem Werkzeugkörper ab und überragt diesen um ein bestimmtes Maß, vorzugsweise 20 mm. Damit ist es möglich, das beispielsweise in Form wenigstens eines Stiftes ausgebildete Mittel ein Stück weit in die Gerätedose einzuführen, damit in letztere einzustecken und auf einfache Weise einen Bezugspunkt der Gerätedose, wie beispielsweise deren Innenwand, zur Markierungskante auszuwählen und damit den gewünschten Abstand zwischen einer anzuzeichnenden Markierungslinie und der Gerätedose festzulegen. Ein solches Mittel kann auch von ungelerntem Personal eingesetzt werden.

Insbesondere bei zwei oder mehr neben- oder übereinander angeordneten Gerätedosen verlaufen die elektrischen Anschlussdrähte vor einem Verbinden der Anschlussdrähte mit dem jeweiligen Geräteeinsatz in der Praxis gelegentlich parallel zu der die Gerätedosen umgebenden Wand. Mithilfe des U-förmigen Querschnitts können derartige parallel zur Wand verlaufende Drähte in aller Regel an ihrem Platz belassen werden und müssen nicht umständlich umgebogen oder in die Gerätedose zurückgedrückt werden. Auch dieses Merkmal trägt also dazu bei, die Montage des jeweiligen Geräteeinsatzes zu vereinfachen, insbesondere zu beschleunigen.

Gemäß einer anderen Weiterbildung weist jeder Steg des U-förmigen Querschnitts an seiner Außenseite regelmäßig angeordnete Markierungen auf, deren Abstand vorzugsweise der Breite der Gerätedosen entspricht. Diese Markierungen erleichtern ein Veranschaulichen der Lage neben- oder übereinander liegender Gerätedosen und bilden somit für den Monteur ein einfaches Hilfsmittel zum erleichterten Anzeichnen einer Markierungslinie für die Montage von Geräteeinsätzen benachbarter Gerätedosen. Derartige Markierungen können auch das Anzeichnen einer Markierungslinie für Gerätedosen erleichtern, die weiter, beispielsweise 20 oder 40 mm, voneinander beanstandet sind, wie dies beispielsweise bei Steckdosen zu Netzwerksteckdosen/Multimediaanschlussdosen der Fall ist.

Gemäß einer besonders bevorzugten Ausführungsform der Erfindung sind die Ausnehmungen in den Stegen im Bereich des wenigstens einen Stifts, ausgebildet. Der Monteur kann die Lage beispielsweise der Stifte auch relativ zur Gerätedose und relativ zu den elektrischen Anschlussdrähten ohne weiteres in seiner natürlichen Arbeitshaltung beispielsweise von schräg oben erkennen. Der Monteur ist daher nicht gezwungen, durch die Ausnehmungen im Grundkörper hindurch zu sehen und dafür seine natürliche Montagehaltung beispielsweise durch Absenken des Kopfes zu verändern. Da jeder Steg eine Ausnehmung im Bereich der Stifte aufweist, ist das erfindungsgemäße Werkzeug sowohl für den Einsatz durch Rechtshänder als auch für den Einsatz durch Linkshänder geeignet. In besonderen Einsatzfällen könnten sich auch ein oder mehrere Anschlussdrähte durch die Ausnehmungen in den Stegen hindurch erstrecken, wenn das erfindungsgemäße Werkzeug an der Wand anliegt und sich die Stifte zumindest teilweise innerhalb der Gerätedose befinden.

Vorteilhafterweise ist am Werkzeugkörper ein Griff vorgesehen, welcher etwa im Bereich des Schwerpunkts des Werkzeugkörpers angeordnet ist. Diese Ausführungsform begünstigt eine stabile Lage des Werkzeugs selbst in dem Fall, in dem der Monteur - auch unabsichtlich - den unmittelbaren Druck auf den Griff zum Halten des Werkzeugs verringert. In einem solchen Fall neigt sich das Werkzeug auch dann nicht zu einer Seite, wenn der Griff asymmetrisch am Werkzeugkörper vorgesehen ist.

Ausführungsbeispiele des Erfindungsgegenstandes werden nachfolgend anhand der Zeichnung näher erläutert, wobei alle beschriebenen und/oder bildlich dargestellten Merkmale für sich oder in beliebiger Kombination den Gegenstand der vorliegenden Erfindung unabhängig von ihrer Zusammenfassung in den Ansprüchen oder deren Rückbeziehung bilden. Es zeigen:
- Fig. 1: eine schematische Draufsicht auf ein Werkzeug zum ausgerichteten Montieren von Geräteeinsätzen für Steckdosen, Schalter und dergleichen in Gerätedosen gemäß einer ersten Ausführungsform;
- Fig. 2: einen Schnitt entlang der Linie A - A in Fig. 1;
- Fig. 3: eine schematische Draufsicht auf ein Werkzeug zum ausgerichteten Montieren von Geräteeinsätzen gemäß einer zweiten Ausführungsform;
- Fig. 4: einen Schnitt entlang der Linie A - A in Fig. 3;
- Fig. 5: einen Schnitt entlang der Linie B - B in den Fig. 1 und 3;
- Fig. 6: eine schematische, perspektivische Ansicht des Werkzeugs während des Einsatzes;
- Fig. 7: eine schematische, perspektivische Ansicht zweier nebeneinander liegender Gerätedosen mit einer mittels des Werkzeugs angezeichneten Markierungslinie; und
- Fig. 8: eine schematische Vorderansicht zweier übereinander angeordneter Steckdosen mit ihren mit den Gerätedosen verbundenen Geräteeinsätzen (ohne Rahmenteil).

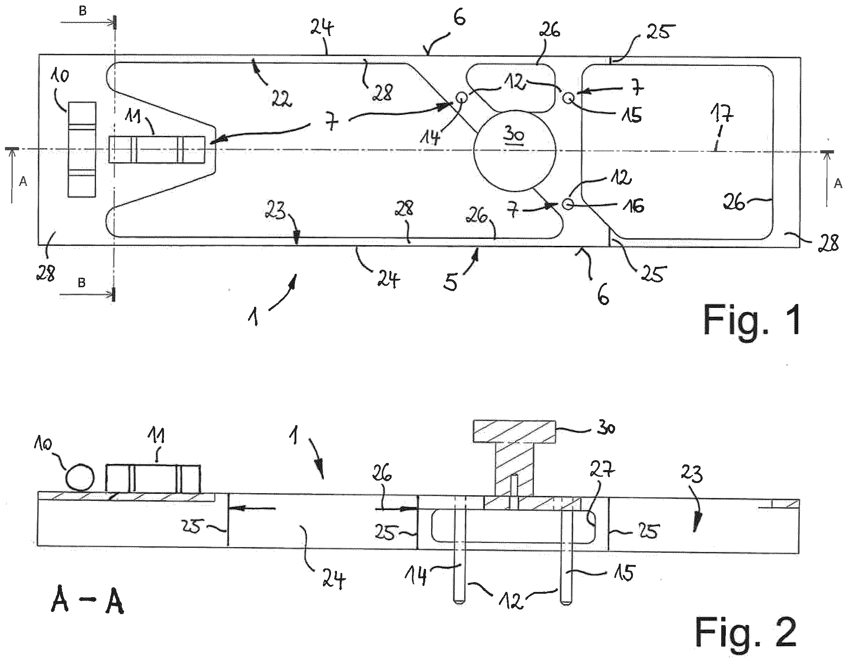

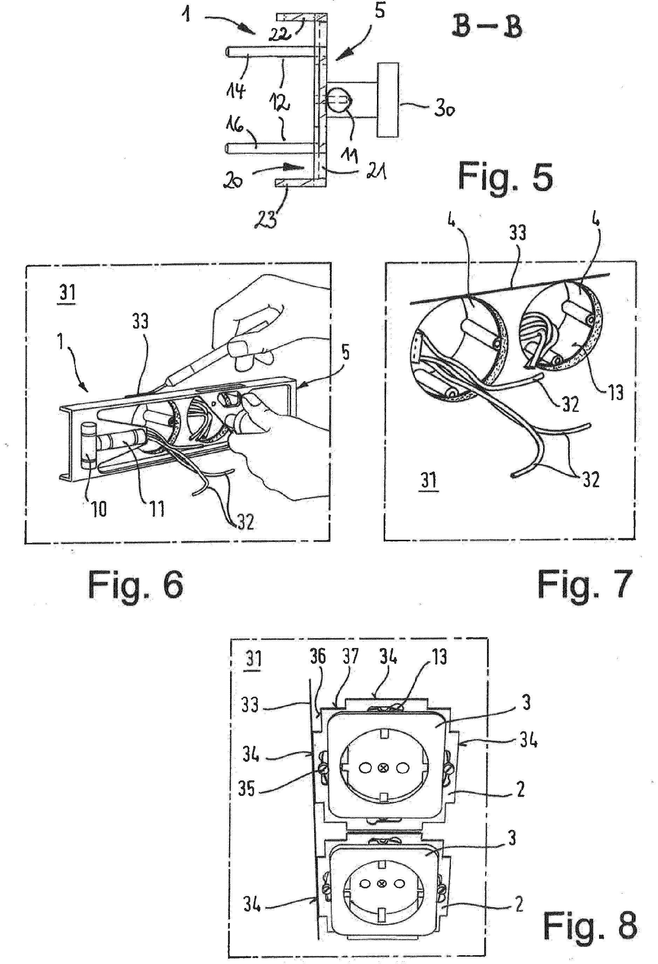

In Fig. 1 ist eine schematische Draufsicht auf ein Werkzeug 1 zum ausgerichteten Montieren von Geräteeinsätzen 2 für Steckdosen 3, nicht näher gezeigte Schalter und dergleichen in Gerätedosen 4 gemäß einer ersten Ausführungsform gezeigt. Geräteeinsätze 2 sind in Fig. 8, Steckdosen 3 ebenfalls in Fig. 8 und Gerätedosen 4 in den Fig. 6 und 7 dargestellt. Das Werkzeug 1 dient, wie nachfolgend noch erläutert wird, zum ausgerichteten Anzeichnen von Markierungs- oder Hilfslinien für das Montieren von Geräteeinsätzen 2.

Das Werkzeug 1 hat einen Werkzeugkörper 5, welcher eine Markierungskante 6 und eine Einrichtung 7 zum Ausrichten der Markierungskante 6 relativ zur Gerätedose 4 aufweist.

Die Einrichtung 7 zum Ausrichten der Markierungskante 6 weist vorzugsweise wenigstens eine Wasserwaage 10, 11 auf. Üblicherweise hat die Einrichtung 7 zwei Wasserwaagen, nämlich die Wasserwaage 10 für eine vertikale Ausrichtung und die Wasserwaage 11 für eine horizontale Ausrichtung des Werkzeugkörpers 5 und damit der Markierungskante 6. Die Einrichtung zum Ausrichten der Markierungskante kann auch derart ausgebildet sein, dass diese eine horizontal oder vertikal ausgerichtete Markierungskante über optische und/oder akustische Mittel anzeigt.

Die Einrichtung 7 hat ferner ein Mittel 12, mit dessen Hilfe die Markierungskante 6 in einer vorbestimmten Lage relativ zur Gerätedosen 4 positionierbar ist. Insofern hat die Einrichtung 7 zum Ausrichten der Markierungskante 6 letztlich im Sinne einer Doppelwirkung zwei Funktionen, nämlich einmal die Funktion, die Markierungskante 6 in einem bestimmten exakten Abstand zur Gerätedose 4 zu halten, zum Zweiten die Funktion, die derart gehaltene Markierungskante exakt horizontal oder vertikal auszurichten.

Gemäß den Fig. 1 bis 5 ist das Mittel 12 derart ausgebildet und am Werkzeugkörper 5 angeordnet, dass damit der gewünschte Abstand zwischen der Innenwand 13 der Gerätedosen 4 und der Markierungskante 6 festgelegt ist. Der gewünschte Abstand richtet sich nach dem Überstand des in die Gerätedose montierten Geräteeinsatzes über den Rand der Gerätedose. Sobald also das Mittel an der Innenwand der Gerätedose anliegt, befindet sich die Markierungskante, sofern diese zusätzlich in horizontaler oder vertikaler Richtung ausgerichtet ist, automatisch in ihrer korrekten Relativlage in Bezug auf die Gerätedose.

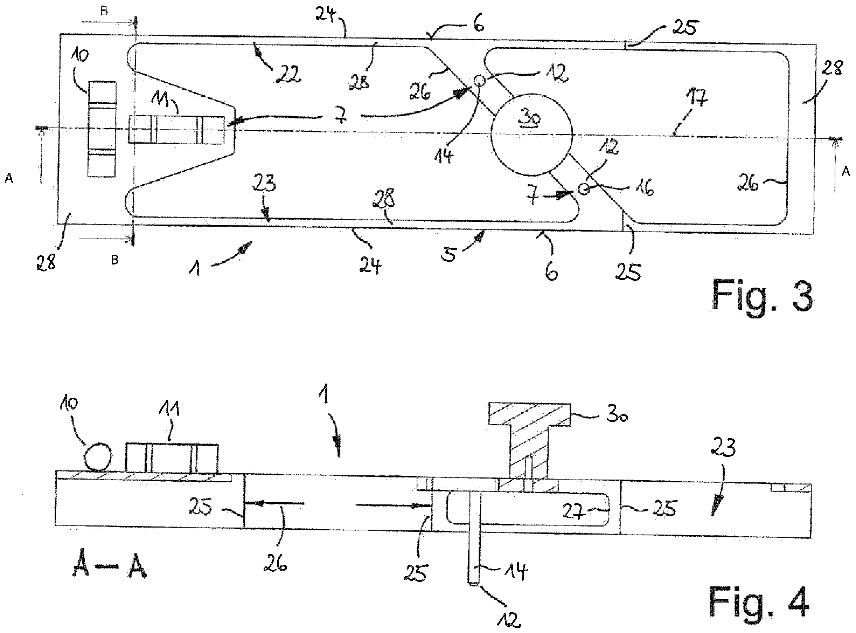

Gemäß einer bevorzugten Ausführungsform umfasst das Mittel 12 wenigstens einen Stift 14, 15, 16, welcher an der Innenwand 13 der Gerätedosen 4 anlegbar ist. Das in Fig. 1 gezeigte Ausführungsbeispiel der Erfindung zeigt drei Stifte 14 bis 16, welche in Form eines gleichschenkligen Dreiecks angeordnet sind. Die beiden Stifte 14 und 15 liegen auf einer Geraden parallel zur zentralen Längsachse 17, die Stifte 15 und 16 auf einer gemeinsamen Querachse. Das in Fig. 3 gezeigte zweite Ausführungsbeispiel des Werkzeugs 1 zeigt lediglich zwei Stifte 14, 16, die auf einer Geraden liegen, welche zur Längsachse 17 des Werkzeugs 1 einen Winkel von etwa 45° einschließt. In dem letztgenannten Ausführungsbeispiel fehlt also der dritte Stift 15, welcher beim ersten Ausführungsbeispiel gemäß Fig. 1 mit dem ersten Stift 13 auf einer Geraden parallel zur Längsachse 17 des Werkzeugs liegt.

Das Mittel 12, welches bevorzugt in Form des wenigstens einen Stiftes 14 bis 16 ausgebildet ist, steht, wie in Fig. 5 gezeigt, senkrecht von dem Werkzeugkörper 5 ab und überragt diesen um ein bestimmtes Maß. Dieses Maß beträgt vorzugsweise aber nicht ausschließlich 20 mm. Wie ferner insbesondere in Fig. 5 gezeigt, hat der Werkzeugkörper 5 einen U-förmigen Querschnitt 20 mit einem Grundkörper 21 und zwei sich einander gegenüberliegend daran anschließenden Stegen 22, 23. Die Stege 22, 23 sind also über den Grundkörper 21 miteinander verbunden. Üblicherweise sind Grundkörper und Stege einstückig miteinander verbunden. Der Querschnitt 20 ist C-förmig ausgebildet sein.

Fig. 2 zeigt einen Längsschnitt entlang der Linie A - A in Fig. 1, Fig. 4 einen Schnitt entlang der Linie A - A in Fig. 3. Fig. 5 zeigt einen Querschnitt entlang der Linie B - B in den Fig. 1 und 3.

Gemäß bevorzugter Ausführungsformen, wie sie in den Fig. 2 und 4 dargestellt sind, weist jeder Steg 22, 23 an seiner Außenseite 24 regelmäßig angeordnete Markierungen 25 auf, die in den Fig. 1 und 3 der Einfachheit halber weggelassen sind. Die Markierungen 25 können in Form einer Rille mit geringer Tiefe ausgebildet sein und sich auch auf der Oberseite 28 des Grundkörpers 21, insbesondere im Bereich jedes Steges 22, 23, befinden, wie dies beispielhaft in Fig. 1 angedeutet ist. Der gegenseitige Abstand 26 der Markierungen 25 entspricht etwa der Breite einer Gerätedose 4 und beträgt üblicherweise aber nicht ausschließlich 70 mm. Wie in den Fig. 2 und 4 gezeigt, hat jeder Steg 22, 23 in Bezug auf seine Markierungen 25 bevorzugt eine Teilung von 4 x 70 mm.

Wie genauer in den Fig. 1 bis 4 sowie schematisch in Fig. 6 gezeigt, hat der Grundkörper 21 und jeder Steg 22, 23 eine Ausnehmung 26, 27, wobei der Grundkörper gemäß Fig. 1 drei Ausnehmungen 26, der Grundkörper 21 gemäß Fig. 3 zwei Ausnehmungen 26 und jeder Steg 22, 23 eine Ausnehmung 27 aufweist.

Fig. 2 und 4 verdeutlichen ferner, dass die Ausnehmungen 27 in den Stegen 22, 23 im Bereich der Mittel 12, vorzugsweise im Bereich des wenigstens einen Stifts 14 bis 16, ausgebildet sind.

Gemäß den Fig. 1 bis 6 ist am Werkzeugkörper 5, vorzugsweise am Grundkörper 21 desselben, ein Griff 30 zum Halten des Werkzeugs 1 vorgesehen. Gemäß einer besonders bevorzugten Ausführungsform ist der Griff 30 etwa im Bereich des Schwerpunkts des Werkzeugkörpers 5 angeordnet.

Wie zuvor beschrieben, dient das erfindungsgemäße Werkzeug zum leichteren Anzeichnen von Markierungs- oder Hilfslinien (Markierungslinie 33) für das Montieren von beispielsweise Steckdosen und Schaltern in diversen Gerätedosen, so dass letztere in horizontaler oder vertikaler Richtung auf einfache Weise korrekt ausgerichtet montiert werden können.

Die Gerätedosen 4 sind bereits innerhalb einer Wand 31 fest montiert, wie dies in den Fig. 6 und 7 angedeutet ist. Der Innendurchmesser jeder Gerätedose 4 beträgt in aller Regel aber nicht ausschließlich etwa 60 mm. Elektrische Anschlussdrähte 32 sind über nicht näher gezeigte Leerrohre mit der jeweiligen Gerätedose verbunden. Dazu sind im Umfang der Wand jeder Gerätedose Bohrungen oder Perforierungen vorgesehen, durch die sich die Leerrohre hindurch erstrecken. Die Leerrohre können bündig mit der Innenwand der Gerätedose enden oder sich ein Stück weit in die Gerätedose hinein erstrecken. Der Abstand zwischen der Vorderkante der Gerätedose und der das jeweilige Leerrohr aufnehmenden Bohrung beträgt üblicherweise aber nicht ausschließlich 20 mm.

Nachfolgend wird die Handhabung des Werkzeugs näher beschrieben.

Der Monteur greift mit einer Hand den Griff 30 des Werkzeugs 1, führt das Werkzeug zur Wand 31 und steckt den wenigstens einen Stift, gemäß den gezeigten Ausführungsformen also die Stifte 14 bis 16 oder die Stifte 14, 16, derart in die Gerätedose 4, dass letztere eng an der Innenwand 13 der Gerätedose 4 und die Markierungskanten 6 des Grundkörpers 21 an der Wand 31 anliegen. Sodann richtet der Monteur eine der Markierungskanten 6, wie in Fig. 6 angedeutet, korrekt in horizontaler Richtung oder für die Montage gemäß Fig. 8 in vertikaler Richtung mithilfe der Wasserwagen 10 oder 11 aus. Sobald sich das Werkzeug 1 mit seiner Markierungskante 6 in ausgerichteter Position befindet, kann an der Wand 31, wie in Fig. 6 angedeutet, eine Markierungslinie 33 angezeichnet werden. Vorteilhafterweise wird diese Markierungslinie 33 in einem Vorgang an sämtlichen nebeneinander befindlichen Gerätedosen angezeichnet, wie dies für zwei Gerätedosen 4 in Fig. 7 dargestellt ist. Es ist klar, dass das in den Fig. 1 bis 4 dargestellte Werkzeug 1 zum Anzeichnen einer Markierungslinie 33 von bis zu vier nebeneinander befindlichen Gerätedosen geeignet ist. Dieser einheitliche Markierungsvorgang kann auch für Gerätedosen, welche beispielsweise 20 oder 40 mm voneinander beabstandet sind, gelten, so dass nicht nur eine Markierungslinie für eine oder mehrere Steckdosen sondern auch eine Markierungslinie für beabstandete Netzwerk- oder Multimediaanschlussdosen angezeichnet werden kann. Es ist aber auch möglich, mithilfe des Werkzeugs an beabstandeten Gerätedosen gewissermaßen in einem ersten Schritt Vormarkierungen anzuzeichnen, anschließend das Werkzeug umzusetzen, d.h. in die beabstandete Gerätedosen einzuführen, und mithilfe der Vormarkierung in einem zweiten Schritt eine endgültige Markierungslinie vorzusehen. Dies erleichtert die zeitversetzte Montage von Steckdosen und Netzwerk-/Multimediaanschlussdosen insbesondere in den Fällen, in denen die Markierungslinie der bereits komplett fertig montierten Dose nicht mehr sichtbar ist.

An die angezeichnete Markierungslinie 33 werden dann Kanten 34 des Geräteeinsatzes 2 angelegt und ausgerichtet. Der Abstand gegenüber liegender Kanten 34 des Geräteeinsatzes 2 entspricht üblicherweise der Teilung der Markierungen 25 auf dem Werkzeug und beträgt vorzugsweise aber nicht ausschließlich 70 mm. In einem solchen Fall liegt die Markierungslinie 33 dann direkt an der Kante 34 des Geräteeinsatzes an, wie dies in Fig. 8 gezeigt ist. Es ist auch möglich, die Markierungslinie so anzuzeichnen bzw. vorzusehen, dass andere Kanten 36 oder 37 des Geräteeinsatzes an der betreffenden Markierungslinie anliegen bzw. an diese angelegt werden können (siehe ebenfalls Fig. 8). Ein ausgerichteter Geräteeinsatzes 2 kann dann mithilfe von Befestigungsmitteln, wie zum Beispiel Schrauben 35, mit der Gerätedose 4 verbunden werden. Nachfolgend können beispielsweise Steckdosen 3, wie in Fig. 8 gezeigt, mit dem Geräteeinsatz 2 verbunden werden, welche sich dann in ausgerichteter Position befinden. Die Markierungslinie 33 ist derart angeordnet, dass sie von einem ebenfalls anzubringenden, nicht dargestellten Rahmen überdeckt wird und daher bei fertig montierter Einheit, wie zum Beispiel einer Steckdose, nicht sichtbar ist.

Es ist auch möglich, die für die Befestigung des Geräteeinsatzes 2 vorgesehenen Schrauben 35 in einem ersten Schritt beispielsweise durch ungelerntes Personal vorzumontieren und bei nachfolgend ausgerichtetem Geräteeinsatzes zeitlich versetzt in einem zweiten Schritt festzuziehen.

Der Abstand der Stifte ist derart gewählt, dass diese mit geringem Spiel in die Gerätedose eingeführt werden können, so dass eventuelle geringfügige Fehlausrichtungen benachbarter Gerätedosen ausgeglichen werden können. Der gegenseitige Abstand der Stifte 14, 16 beträgt beispielsweise aber nicht ausschließlich 55,5 mm gerechnet Stiftmitte zu Stiftmitte, der Abstand jedes Stiftes 14 bis 16 zur Markierungskante 6 beträgt beispielsweise aber nicht ausschließlich 15 mm. Der gegenseitige Abstand der Stifte 14, 15 beträgt beispielsweise aber nicht ausschließlich zwischen 39 und 40 mm wiederum gerechnet Stiftmitte zu Stiftmitte. Wie zuvor bereits erwähnt sind die Stifte 14 bis 16 vorzugsweise in Form eines gleichschenkligen Dreiecks angeordnet. Insofern beträgt der gegenseitige Abstand der Stifte 15 und 16 ebenfalls von Stiftmitte zu Stiftmitte beispielsweise aber nicht ausschließlich zwischen 39 und 40 mm.

Das Werkzeug 1 ist aus einem elektrisch nicht leitenden Material, wie zum Beispiel aus Kunststoff, gefertigt.

Es ist klar, dass die Markierungslinie 33 bei horizontaler Montage der Gerätedosen oberhalb oder unterhalb der Gerätedosen bzw. bei vertikaler Montage auf der linken oder rechten Seite der Gerätedosen angezeichnet werden kann. Es ist ferner klar, dass sich die Stifte 14 bis 16 an Positionen außerhalb derjenigen Anordnungen befinden, wie sie zum Ein-/Festschrauben der Schrauben 35 zum Befestigen des jeweiligen Geräteeinsatzes 2 an der Gerätedose 4 benötigt werden.

Bei den Dosen kann es sich beispielsweise um Hohlwanddosen, Schallschutzdosen, Brandschutzdosen, Betondosen, Schalterabzweigdosen oder Schalterdosen handeln.

Damit ist ein Werkzeug geschaffen, mit dem eine ausgerichtete Montage von Geräteeinsätzen möglich bzw. leicht durchführbar ist.

## Patentansprüche

1. Werkzeug zum ausgerichteten Montieren von Geräteeinsätzen (2) für Steckdosen (3), Schalter und dergleichen in Gerätedosen (4),
mit einem Werkzeugkörper (5), welcher eine Markierungskante (6) und eine Einrichtung (7) zum Ausrichten der Markierungskante (6) relativ zur Gerätedose (4) aufweist,
wobei der Werkzeugkörper (5) einen U- oder C- förmigen Querschnitt (20) mit einem Grundkörper (21) und zwei sich einander gegenüber liegend daran anschließenden Stegen (22, 23) hat,
wobei die Einrichtung (7) zum Ausrichten der Markierungskante (6) ein Mittel (12) aufweist, mit dessen Hilfe die Markierungskante (6) in einer vorbestimmten Lage relativ zur Gerätedose (4) positionierbar ist und
wobei der Grundkörper (21) eine Ausnehmung (26) hat,
wobei die wenigstens eine Ausnehmung (26) im Grundkörper (21) derart ausgebildet ist, dass aus der Gerätedose (4) vorstehende elektrische Anschlussdrähte (32) an ihrem Platz verbleiben können, indem das Werkzeug mit seinem Werkzeugkörper (5) über die Drähte (32) zur Wand geführt wird, so dass die Anschlussdrähte (32) durch die jeweilige Ausnehmung (26) hindurch ragen, **dadurch gekennzeichnet, dass**
jeder Steg (22, 23) eine Ausnehmung (27) hat,
wobei die Ausnehmungen (27) in den Stegen (22, 23) im Bereich der Mittel (12) ausgebildet sind, und
wobei ferner die Ausnehmungen (27) im Bereich der Stege (22, 23) derart ausgebildet sind, dass das Mittel (12), mit dessen Hilfe die Markierungskante (6) in einer vorbestimmten Lage relativ zur Gerätedose (4) positionierbar ist, für den Monteur gut einsehbar und damit sichtbar ist.

2. Werkzeug nach Anspruch 1, **dadurch gekennzeichnet, dass** die Einrichtung (7) zum Ausrichten der Markierungskante (6) wenigstens eine Wasserwaage (10, 11) aufweist.

3. Werkzeug nach Anspruch 1 oder 2, **dadurch gekennzeichnet, dass** das Mittel (12) derart am Werkzeugkörper (5) angeordnet ist, dass damit der gewünschte Abstand zwischen der Innenwand (13) der Gerätedose (4) und der Markierungskante (6) festgelegt ist.

4. Werkzeug nach einem der Ansprüche 1 bis 3, **dadurch gekennzeichnet, dass** das Mittel (12) wenigstens einen Stift (14, 15, 16) umfasst, welcher an der Innenwand (13) der Gerätedose (4) anlegbar ist.

5. Werkzeug nach einem der Ansprüche 1 bis 4, **dadurch gekennzeichnet, dass** das Mittel (12) senkrecht von dem Werkzeugkörper (5) absteht und diesen um ein bestimmtes Maß, vorzugsweise 20 mm, überragt.

6. Werkzeug nach einem der vorhergehenden Ansprüche, **dadurch gekennzeichnet, dass** jeder Steg (22, 23) an seiner Außenseite (24) regelmäßig angeordnete Markierungen (25) aufweist, deren Abstand der Breite der Gerätedose (4) etwa entspricht.

7. Werkzeug nach Anspruch 1 oder 2, **dadurch gekennzeichnet, dass** die Ausnehmungen (27) in den Stegen (22, 23) im Bereich des wenigstens einen Stifts (14 bis 16) ausgebildet sind.

8. Werkzeug nach einem der vorhergehenden Ansprüche, **dadurch gekennzeichnet, dass** am Werkzeugkörper (5) ein Griff (30) vorgesehen ist, welcher etwa im Bereich des Schwerpunkts des Werkzeugkörpers (5) angeordnet ist.

## Claims

1. Tool for aligned mounting of device inserts (2) for sockets (3), switches and the like in device boxes (4),
with a tool body (5), which has a marking edge (6) and means (7) for aligning the marking edge (6) relative to the device box (4),
wherein the tool body (5) has a U- or C-shaped cross-section (20) with a base body (21) and two bars (22, 23) adjoining it opposite one another,
wherein the device (7) for aligning the marking edge (6) comprises a means (12) by means of which the marking edge (6) can be positioned in a predetermined position relative to the device box (4), and
wherein the base body (21) has a recess (26),
wherein the at least one recess (26) in the base body (21) is formed in such a way that electrical connecting wires (32) protruding from the device box (4) can remain in place by guiding the tool with its tool body (5) over the wires (32) to the wall so that the connecting wires (32) protrude through the respective recess (26), **characterized in that**
each bar (22, 23) has a recess (27), wherein the recesses (27) being formed in the bars (22, 23) in the region of the means (12), and
wherein, furthermore, the recesses (27) in the region of the bars (22, 23) are formed in such a way that the means (12), with the aid of which the marking edge (6) can be positioned in a predetermined position relative to the device box (4), can be easily seen by the fitter and is thus visible.

2. Tool according to claim 1, **characterized in that** the device (7) for aligning the marking edge (6) comprises at least one spirit level (10, 11).

3. Tool according to claim 1 or 2, **characterized in that** the means (12) is arranged on the tool body (5) in such a way that the desired distance between the inner wall (13) of the device box (4) and the marking edge (6) is fixed therewith.

4. Tool according to any one of claims 1 to 3, **characterized in that** the means (12) comprises at least one pin (14, 15, 16) which can be placed against the inner wall (13) of the device box (4).

5. Tool according to any one of claims 1 to 4, **characterized in that** the means (12) projects perpendicularly from the tool body (5) and projects beyond it by a certain amount, preferably 20 mm.

6. Tool according to one of the preceding claims, **characterized in that** each bar (22, 23) has regularly arranged markings (25) on its outer side (24), the spacing of which approximately corresponds to the width of the device box (4).

7. Tool according to claim 1 or 2, **characterized in that** the recesses (27) are formed in the bars (22, 23) in the region of the at least one pin (14 to 16).

8. Tool according to one of the preceding claims, **characterized in that** a handle (30) is provided on the tool body (5), which is arranged approximately in the region of the center of gravity of the tool body (5).

## Revendications

1. Outil pour le montage aligné d'inserts d'appareil (2) pour des prises de courant (3), des interrupteurs et analogues dans des boîtiers d'appareil (4),
avec un corps d'outil (5) qui présente une arête de repérage (6) et un dispositif (7) pour aligner l'arête de repérage (6) par rapport au boîtier d'appareil (4),
dans lequel le corps d'outil (5) a une section transversale (20) en forme de U ou de C avec un corps de base (21) et deux ailes (22, 23) qui s'y raccordent en étant opposées l'une à l'autre,
dans lequel le dispositif (7) pour aligner l'arête de repérage (6) présente un moyen (12) à l'aide duquel l'arête de repérage (6) peut être positionnée dans une position prédéterminée par rapport au boîtier d'appareil (4) et
dans lequel le corps de base (21) présente un évidement (26),
dans lequel ledit au moins un évidement (26) dans le corps de base (21) est réalisé de telle sorte que des fils de raccordement électrique (32) dépassant du boîtier d'appareil (4) peuvent rester à leur place, l'outil étant guidé avec son corps d'outil (5) par-dessus les fils (32) vers la paroi, de telle sorte que les fils de raccordement (32) passent à travers l'évidement respectif (26),
**caractérisé en ce que** chaque aile (22, 23) présente un évidement (27), les évidements (27) étant formés dans les ailes (22, 23) dans la zone des moyens (12), et
dans lequel les évidements (27) sont en outre formés dans la zone des ailes (22, 23) de telle sorte que le moyen (12), à l'aide duquel l'arête de repérage (6) peut être positionnée dans une position prédéterminée par rapport au boîtier d'appareil (4), est bien accessible et donc visible pour le monteur.

2. Outil selon la revendication 1, **caractérisé en ce que** le dispositif (7) pour aligner l'arête de repérage (6) présente au moins un niveau à bulle (10, 11).

3. Outil selon la revendication 1 ou 2, **caractérisé en ce que** le moyen (12) est disposé sur le corps d'outil (5) de telle sorte qu'il permet de définir la distance souhaitée entre la paroi intérieure (13) du boîtier d'appareil (4) et l'arête de repérage (6).

4. Outil selon l'une des revendications 1 à 3, **caractérisé en ce que** le moyen (12) comprend au moins une tige (14, 15, 16) qui peut être appliquée contre la paroi intérieure (13) du boîtier d'appareil (4).

5. Outil selon l'une des revendications 1 à 4, **caractérisé en ce que** le moyen (12) fait saillie perpendiculairement du corps d'outil (5) et le dépasse d'une certaine mesure, de préférence de 20 mm.

6. Outil selon l'une des revendications précédentes, **caractérisé en ce que** chaque aile (22, 23) présente sur sa face extérieure (24) des repères (25) disposés régulièrement et dont l'espacement correspond sensiblement à la largeur du boîtier d'appareil (4).

7. Outil selon la revendication 1 du 2, **caractérisé en ce que** les évidements (27) dans les ailes (22, 23) sont formés dans la zone de ladite au moins une tige (14 à 16).

8. Outil selon l'une des revendications précédentes, **caractérisé en ce qu'**une poignée (30) est prévue sur le corps d'outil (5), laquelle est disposée approximativement dans la zone du centre de gravité du corps d'outil (5).
